# EUROPÄISCHE PATENTANMELDUNG

(11) **EP 3 669 966 A1**
(43) Veröffentlichungstag der Anmeldung: **24.06.2020**
(21) Anmeldenummer: 19000564.5
(22) Anmeldetag: 17.12.2019
(51) Int. Cl.: B01D 46/00

(54) **VERFAHREN ZUR ENTNAHME EINER ENDFILTERKASSETTE AUS EINEM ENTSTAUBER BZW. INDUSTRIESTAUBSAUGER FÜR GESUNDHEITSGEFÄHRDENDE STÄUBE UND ZUR EINBRINGUNG DER ENDFILTERKASSETTE IN EINEN ENTSORGUNGSBEUTEL**

(30) Priorität: 21.12.2018 DE 102018010094
(71) Anmelder: Belfor Europe GmbH, 47269 Duisburg (DE)
(72) Erfinder: Nützl, Peter, 85646 Anzing (DE)
(74) Vertreter: Lelgemann, Karl-Heinz

(57) **Zusammenfassung**

Bei einem Verfahren zur Entnahme einer Endfilterkassette (1) aus einem Entstauber bzw. Industriestaubsauger (2) für gesundheitsgefährdende Stäube und zur Einbringung der Endfilterkassette (1) in einen Entsorgungsbeutel (3) wird der Entsorgungsbeutel (3) an einem mit einem hinsichtlich seiner Abmessungen an die eines Einschubkragens (6) einer die Endfilterkassette (1) halternden Aufnahme angepassten Überwurf- bzw. Klemmring (5) versehenen Öffnungsrand (4) auf den Einschubkragen (6) der die Endfilterkassette (1) halternden Aufnahme aufgeschoben bzw. aufgesteckt. Danach wird der Entsorgungsbeutel (3) in seiner gesamten Längsabmessung ausgezogen, wonach der Entsorgungsbeutel (3) an seinem dem Überwurf- bzw. Klemmring (5) entgegengesetzten Ende ergriffen wird, und das zum Überwurf- bzw. Klemmring (5) entgegengesetzte Ende des Entsorgungsbeutels (3) unter Zusammenraffung desselben an eine dem Einschubkragen (6) zugeordnete Kante (7) der Endfilterkassette (1) angenähert wird. Die Endfilterkassette (1) wird nunmehr an der dem Einschubkragen (6) zugeordneten Kante (7) durch das dem zum Überwurf- bzw. Klemmring (5) entgegengesetzte Ende des Entsorgungsbeutels (3) hindurch ergriffen und dann aus der Aufnahme heraus und durch den Einschubkragen (6) hindurch in den Entsorgungsbeutel (3) hineingezogen. Danach wird der Entsorgungsbeutel (3) an seinem den Überwurf- bzw. Klemmring (5) aufweisenden Öffnungsrand (4) vom Einschubkragen (6) abgezogen und verschlossen.

## Beschreibung

Die Erfindung bezieht sich auf ein Verfahren zur Entnahme einer Endfilterkassette aus einem Entstauber bzw. Industriestaubsauger für gesundheitsgefährdende Stäube und zur Einbringung der Endfilterkassette in einen Entsorgungsbeutel.

Bei der Entnahme der Endfilterkassetten aus Entstaubern bzw. Industriestaubsaugern kommt es häufig dazu, dass aus der Endfilterkassette Staubpartikel austreten, bevor diese Endfilterkassette staubdicht in einem Entsorgungsbeutel od.dgl. aufgenommen ist.

Ausgehend von dem vorstehend geschilderten Stand der Technik liegt der Erfindung die Aufgabe zugrunde, ein Verfahren zur Entnahme einer Endfilterkassette aus einem Entstauber bzw. Industriestaubsauger für gesundheitsgefährdende Stäube und zur Einbringung der Endfilterkassette in einen Entsorgungsbeutel zur Verfügung zu stellen, bei dem das Austreten gesundheitsgefährdender Stäube während der Entnahme der Endfilterkassette aus dem Entstauber bzw. Industriestaubsauger zuverlässig vermieden werden kann.

Diese Aufgabe wird durch ein Verfahren zur Entnahme einer Endfilterkassette aus einem Entstauber bzw. Industriestaubsauger für gesundheitsgefährdende Stäube und zur Einbringung der Endfilterkassette in einen Entsorgungsbeutel gelöst, bei dem der Entsorgungsbeutel an einem mit einem hinsichtlich seiner Abmessungen an die eines Einschubkragens einer die Endfilterkassette haltenden Aufnahme angepassten Überwurf- bzw. Klemmring versehenen Öffnungsrand auf den Einschubkragen der die Endfilterkassette haltenden Aufnahme aufgeschoben bzw. aufgesteckt wird, der Entsorgungsbeutel in seiner gesamten Längsabmessung ausgezogen wird, der Entsorgungsbeutel an seinem dem Überwurf- bzw. Klemmring entgegengesetzten Ende ergriffen wird, das zum Überwurf- bzw. Klemmring entgegengesetzte Ende des Entsorgungsbeutels unter Zusammenraffung desselben an eine dem Einschubkragen zugeordnete Kante der Endfilterkassette angenähert wird, die Endfilterkassette an der dem Einschubkragen zugeordneten Kante durch das dem zum Überwurf- bzw. Klemmring entgegengesetzte Ende des Entsorgungsbeutels hindurch ergriffen wird, die Endfilterkassette aus der Aufnahme heraus und durch den Einschubkragen hindurch in den Entsorgungsbeutel hineingezogen wird, und der Entsorgungsbeutel an seinem den Überwurf- bzw. Klemmring aufweisenden Rand vom Einschubkragen abgezogen und verschlossen wird.
Beim erfindungsgemäßen Verfahren wird der Entsorgungsbeutel mittels des an ihm vorgesehenen Überwurf- bzw. Klemmrings in staubdichten Eingriff mit dem Einschubkragen verbracht, bevor überhaupt eine Bewegung der Endfilterkassette eingeleitet wird. Von daher ist ein Austreten von in der Endfilterkassette vorhandenen gesundheitsgefährdenden Stäuben in die Umgebung ausgeschlossen. Da die Längsabmessung des Entsorgungsbeutels so gewählt wird, dass sie die Längsabmessung der Endfilterkassette übersteigt, gilt dies auch für die Zeitspanne zwischen dem Abziehen des Entsorgungsbeutels vom Einschubkragen und dem Verschließen des Entsorgungsbeutels. Aufgrund der vorgesehenen Elastizität des Überwurf- bzw. Klemmrings besteht zwischen dem Entsorgungsbeutel einerseits und dem Einschubkragen der entstauber- bzw. industriestaubsaugerseitigen Aufnahme andererseits eine staubdichte Verbindung.

Um den Entsorgungsbeutel in einfacher Weise mit dem an die Abmessungen des Einschubkragens angepassten Überwurf- bzw. Klemmring zu versehen, ist es vorteilhaft, wenn zur Anbringung des Überwurf- bzw. Klemmrings an einer Beutelöffnung des Entsorgungsbeutels der Entsorgungsbeutel mit seinem seine Beutelöffnung umgebenden Öffnungsrand über den hinsichtlich seiner Abmessungen an die des Einschubkragens der die Endfilterkassette halternden Aufnahme angepassten Überwurf- bzw. Klemmring gestülpt bzw. umgeschlagen wird. Durch den elastischen und hinsichtlich seiner Abmessungen an die des Einschubkragens angepassten Überwurf- bzw. Klemmring kann eine hohe Staubdichtigkeit der Verbindung zwischen Entsorgungsbeutel und Einschubkragen sichergestellt werden, und zwar unabhängig von den Abmessungen des Entsorgungsbeutels.

Um auch die Staubentwicklung im Innenraum des Entsorgungsbeutels bei der Entnahme der Endfilterkassette aus der entstauber- bzw. industriestaubsaugerseitigen Aufnahme zu minimieren, ist es vorteilhaft, wenn der mit dem Überwurf- bzw. Klemmring versehene Entsorgungsbeutel auf seiner Innenfläche befeuchtet wird. Grundsätzlich ist es auch möglich, den Entsorgungsbeutel bereits auf seiner Innenfläche zu befeuchten, bevor er mit dem Überwurf- bzw. Klemmring versehen wird. Gemäß einer weiteren vorteilhaften Ausgestaltung des erfindungsgemäßen Verfahrens wird ein Überwurf- bzw. Klemmring eingesetzt, dessen Abmessungen hinsichtlich Länge und Breite und der in seiner Geometrie an die des Einschubkragens der die Endfilterkassette halternden Aufnahme angepasst sind bzw. ist, wobei hierdurch die Staubdichtigkeit der Verbindung zwischen Entsorgungsbeutel einerseits und Einschubkragen andererseits weiter erhöht wird.

Gemäß einer weiteren vorteilhaften Ausführungsform des erfindungsgemäßen Verfahrens wird der Überwurf- bzw. Klemmring nach dem Abziehen desselben vom Einschubkragen und vor dem Verschließen des Entsorgungsbeutels vom Öffnungsrand des Entsorgungsbeutels in Richtung auf die im Entsorgungsbeutel aufgenommene Endfilterkassette verschoben und nach dem Verschließen des Entsorgungsbeutels über den geschlossenen Öffnungsrand desselben vom Entsorgungsbeutel abgenommen. Entsprechend kann der Überwurf- bzw. Klemmring bei der nächsten Entnahme einer Endfilterkassette aus dem betreffenden Entstauber bzw. Industriestaubsauger wieder verwendet werden.

Mittels des vorstehend geschilderten erfindungsgemäßen Verfahrens zur Entnahme einer Endfilterkassette aus einem Entstauber bzw. Industriestaubsauger für gesundheitsgefährdende Stäube und zur Einbringung der Endfilterkassette in einen Entsorgungsbeutel kann für alle gängigen und üblichen Staubklassen, d.h. auch für die M-Staubklasse, die H-Staubklasse und die H-Asbest-Staubklasse gemäß der IEC/EN 60335-2-69 eine staubarme bzw. staubfreie Entsorgung der Endfilterkassetten erreicht werden.

Im Folgenden wird die Erfindung anhand einer Ausführungsform unter Bezugnahme auf die Zeichnung näher erläutert.

Es zeigen:
- Figur 1: eine Prinzipdarstellung eines Entsorgungsbeutels und eines zugeordneten Überwurf- bzw. Klemmrings, wie sie beim erfindungsgemäßen Verfahren zur Entnahme einer Endfilterkassette aus einem Entstauber bzw. Industriestaubsauger zum Einsatz kommen;
- Figur 2: eine Darstellung des mit dem Überwurf- bzw. Klemmring versehenen Entsorgungsbeutels; und
- Figur 3: eine Darstellung des in Figur 2 gezeigten, mit dem Überwurf- bzw. Klemmring versehenen Entsorgungsbeutels beim Aufstecken auf einen Einschubkragen.

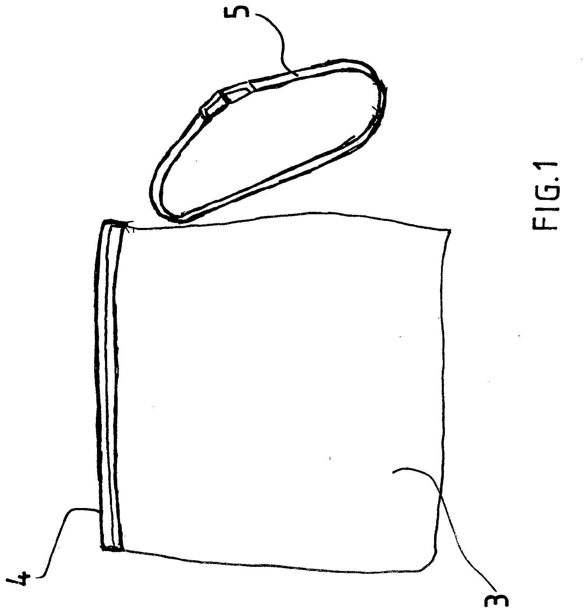

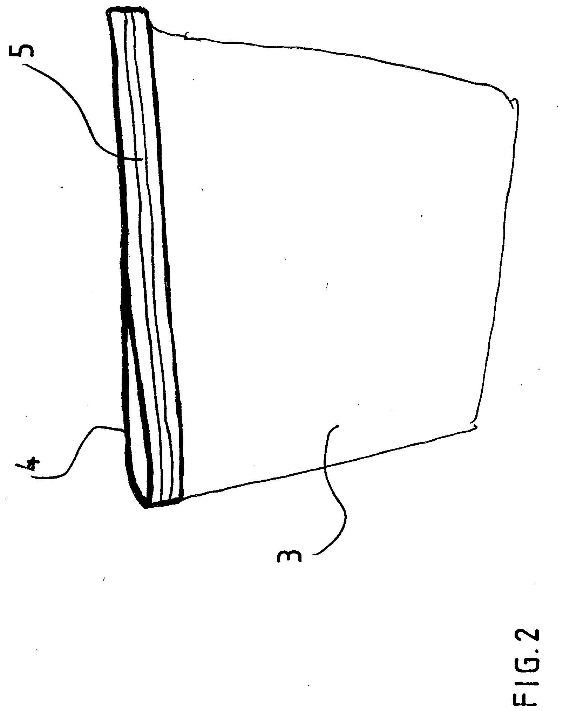

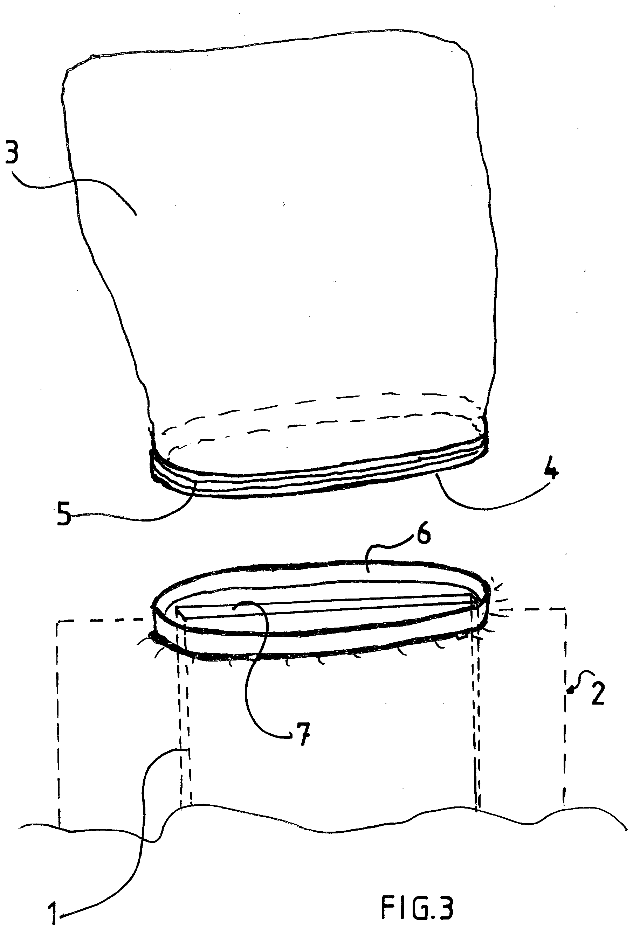

Bei einem im Folgenden anhand einer Ausführungsform geschilderten erfindungsgemäßen Verfahren zur Entnahme einer in Figur 3 gezeigten Endfilterkassette 1 aus einem ebenfalls in Figur 3, und dort lediglich angedeutet, dargestelltem Entstauber bzw. Industriestaubsauger 2 für gesundheitsgefährdende Stäube kommt ein im Folgenden anhand der Figuren 1 und 2 näher erläuterter Entsorgungsbeutel 3 zum Einsatz.

Die in Figur 1 gezeigte Ausführungsform eines derartigen Entsorgungsbeutels 3 hat einen Öffnungsrand 4, an dem der Entsorgungsbeutel 3 mit einem Überwurf- bzw. Klemmring 5 versehen wird. Hierzu wird der Überwurf- bzw. Klemmring 5 über den Öffnungsrand 4 des Entsorgungsbeutels 3 auf den Entsorgungsbeutel 3 aufgeschoben, wobei danach der Öffnungsrand 4 des Entsorgungsbeutels 3 über den Überwurf- bzw. Klemmring 5 gestülpt wird.

Der Überwurf- bzw. Klemmring 5 kann somit hinsichtlich seiner Länge und Breite und seiner Geometrie an die entsprechenden Abmessungen bzw. Ausgestaltungen eines lediglich in Figur 3 prinzipiell dargestellten Einschubkragens 6 einer die Endfilterkassette 1 halternden und im Übrigen nicht dargestellten Aufnahme, die am Entstauber bzw. Industriestaubsauger 2 ausgebildet ist, angepasst sein. Dahingegen kann als Entsorgungsbeutel 3 ein standardisierter Entsorgungsbeutel zum Einsatz kommen, dessen Abmessungen lediglich dergestalt sein müssen, dass im Entsorgungsbeutel 3 die Endfilterkassette 1 aufnehmbar ist, wobei die Öffnung des Entsorgungsbeutels 3 zumindest der Öffnungsfläche des Einschubkragens 6 entsprechen sollte.

Bei der Durchführung des Verfahrens zur Entnahme der Endfilterkassette 1 aus dem Entstauber bzw. Industriestaubsauger 2 und zur Einbringung der Endfilterkassette 1 in den Entsorgungsbeutel 3 wird der Entsorgungsbeutel 3 zunächst mit dem Überwurf- bzw. Klemmring 5 versehen. Hierzu wird der Entsorgungsbeutel 3 mit dem Überwurf- bzw. Klemmring 5, der hinsichtlich seiner Abmessungen an die des Einschubkragens 6 der die Endfilterkassette 1 halternden, entstauber- bzw. industriestaubsaugerseitigen Aufnahme angepasst ist, versehenen Öffnungsrand 4 auf den Einschubkragen 6 der die Endfilterkassette 1 halternden Aufnahme aufgeschoben bzw. aufgesteckt.

Vor dem Aufstecken des Entsorgungsbeutels 3 auf den Einschubkragen 6 wird dieser auf seiner Innenfläche, z.B. mittels einer Sprühflasche, mit einem staubbindenden Mittel besprüht. Hierdurch kann bei der Entnahme der Endfilterkassette 1 aus dem Entstauber bzw. Industriestaubsauger 2 das Austreten von Staub aus dem Entsorgungsbeutel 3 weiter reduziert werden.

Der Entsorgungsbeutel 3 wird nach dem Aufstecken auf den Einschubkragen 6 in seiner gesamten Längsabmessung ausgezogen.

Danach wird der Entsorgungsbeutel 3 an seinem dem am Öffnungsrand 4 vorgesehenen Überwurf- bzw. Klemmring 5 entgegengesetzten Ende ergriffen und unter Zusammenraffung des Entsorgungsbeutels 3 mit dem dem Überwurf- bzw. Klemmring 5 entgegengesetzten Ende an eine Kante 7 der Endfilterkassette 1 angenähert, die dem Einschubkragen 6 der für die Endfilterkassette 1 vorgesehenen Aufnahme des Entstaubers bzw. Industriestaubsaugers 2 zugeordnet ist.

Danach wird die Endfilterkassette 1 durch das dem zum Überwurf- bzw. Klemmring 5 entgegengesetzte Ende des Entsorgungsbeutels 3 hindurch ergriffen, wobei zur Erleichterung des Ergreifens an bzw. nahe der betreffenden Kante 7 der Endfilterkassette 1 Vertiefungen od.dgl. vorgesehen sein können.

Danach wird die Endfilterkassette 1 aus der Aufnahme heraus und durch den Einschubkragen 6 hindurch in den Entsorgungsbeutel 3 hineingezogen, wobei das dem Überwurf- bzw. Klemmring entgegengesetzte Ende des Entsorgungsbeutels 3 vom Einschubkragen 6 entfernt wird.

Nachdem die Endfilterkassette 1 insgesamt im Entsorgungsbeutel 3 aufgenommen ist, wird der Entsorgungsbeutel 3 bzw. der dem Entsorgungsbeutel 3 zugeordnete Überwurf- bzw. Klemmring 5 vom Einschubkragen 6 abgezogen, wonach der Entsorgungsbeutel 3 im Bereich seines Öffnungsrands 4 geschlossen wird.

Nach dem Abziehen des Entsorgungsbeutels 3 vom Einschubkragen 6 der entstauber- bzw. industriestaubsaugerseitigen Aufnahme und vor dem Verschließen des Entsorgungsbeutels 3 wird der Überwurf- bzw. Klemmring 5 vom Öffnungsrand 4 des Entsorgungsbeutels 3 in Richtung auf die im Entsorgungsbeutel 3 aufgenommene Endfilterkassette 1 verschoben. Nach dem Verschließen des Entsorgungsbeutels 3 wird dann der Überwurf- bzw. Klemmring 5 über den geschlossenen Öffnungsrand 4 des Entsorgungsbeutels 3 vom Entsorgungsbeutel 3 abgenommen.

Nach dem Verschließen des Entsorgungsbeutels 3 ist die Endfilterkassette 1 staubdicht innerhalb des Entsorgungsbeutels 3 aufgenommen, wobei auch beim Herausziehen der Endfilterkassette 1 aus der entstauber- bzw. industriestaubsaugerseitigen Aufnahme kein Staub austreten kann.

## Patentansprüche

1. Verfahren zur Entnahme einer Endfilterkassette (1) aus einem Entstauber bzw. Industriestaubsauger (2) für gesundheitsgefährdende Stäube und zur Einbringung der Endfilterkassette (1) in einen Entsorgungsbeutel (3), bei dem der Entsorgungsbeutel (3) an einem mit einem hinsichtlich seiner Abmessungen an die eines Einschubkragens (6) einer die Endfilterkassette (1) halternden Aufnahme angepassten Überwurf- bzw. Klemmring (5) versehenen Öffnungsrand (4) auf den Einschubkragen (6) der die Endfilterkassette (1) halternden Aufnahme aufgeschoben bzw. aufgesteckt wird, der Entsorgungsbeutel (3) in seiner gesamten Längsabmessung ausgezogen wird, der Entsorgungsbeutel (3) an seinem dem Überwurf- bzw. Klemmring (5) entgegengesetzten Ende ergriffen wird, das zum Überwurf- bzw. Klemmring (5) entgegengesetzte Ende des Entsorgungsbeutels (3) unter Zusammenraffung desselben an eine dem Einschubkragen (6) zugeordnete Kante (7) der Endfilterkassette (1) angenähert wird, die Endfilterkassette (1) an der dem Einschubkragen (6) zugeordneten Kante (7) durch das dem zum Überwurf- bzw. Klemmring (5) entgegengesetzte Ende des Entsorgungsbeutels (3) hindurch ergriffen wird, die Endfilterkassette (1) aus der Aufnahme heraus und durch den Einschubkragen (6) hindurch in den Entsorgungsbeutel (3) hineingezogen wird, und der Entsorgungsbeutel (3) an seinem den Überwurf- bzw. Klemmring (5) aufweisenden Öffnungsrand (4) vom Einschubkragen (6) abgezogen und verschlossen wird.

2. Verfahren nach Anspruch 1, bei dem zur Anbringung des Überwurf- bzw. Klemmrings (5) an einer Beutelöffnung des Entsorgungsbeutels (3) der Entsorgungsbeutel (3) mit seinem seine Beutelöffnung umgebenden Öffnungsrand (4) über den hinsichtlich seiner Abmessungen an die des Einschubkragens (6) der die Endfilterkassette (1) halternden Aufnahme angepassten Überwurf- bzw. Klemmring (5) gestülpt bzw. umgeschlagen wird.

3. Verfahren nach Anspruch 2 oder 1, bei dem der Entsorgungsbeutel (3), vorzugsweise nachdem er mit dem Überwurf- bzw. Klemmring (5) versehen ist, auf seiner Innenfläche befeuchtet wird.

4. Verfahren nach einem der Ansprüche 1 bis 3, bei dem ein Überwurf- bzw. Klemmring (5) eingesetzt wird, dessen Abmessungen hinsichtlich Länge und Breite und der in seiner Geometrie an die des Einschubkragens (6) der die Endfilterkassette (1) halternden Aufnahme angepasst sind bzw. ist.

5. Verfahren nach einem der Ansprüche 1 bis 4, bei dem der Überwurf- bzw. Klemmring (5) nach dem Abziehen desselben vom Einschubkragen (6) und vor dem Verschließen des Entsorgungsbeutels (3) vom Öffnungsrand (4) desselben in Richtung auf die im Entsorgungsbeutel (3) aufgenommene Endfilterkassette (1) verschoben und nach dem Verschließen des Entsorgungsbeutels (3) über den geschlossenen Öffnungsrand (4) desselben vom Entsorgungsbeutel (3) abgenommen wird.
